# FASCICULE DE BREVET EUROPEEN

(11) **EP 2 452 065 B1**
(45) Date de publication et mention de la délivrance du brevet: **06.09.2017**
(21) Numéro de dépôt: 10751980.3
(22) Date de dépôt: 08.07.2010
(51) Int. Cl.: F02K 9/97, F02K 9/64

(54) **CHAMBRE DE COMBUSTION COMPORTANT UNE BARRIERE ANTI-CONDENSATION SUR CIRCUIT REGENERATIF**
KONDENSATIONSFESTE SPERRSCHICHT AUF EINEM REGENERATIVEN SCHALTKREIS
CONDENSATION-PROOF BARRIER ON REGENERATIVE CIRCUIT

(30) Priorité: 09.07.2009 FR 0954765
(43) Date de publication de la demande: 16.05.2012
(73) Titulaire: ArianeGroup SAS, 75015 Paris (FR)
(72) Inventeur: CORNU, Daniel, 78200 Mantes La Jolie (FR)
(74) Mandataire: Berbinau, Pierre Jean Marie
(86) Numéro de dépôt international: PCT/FR2010/051445
(87) Numéro de publication internationale: WO 2011/004127

(56) Documents cités:
- EP-A1- 0 943 795
- EP-A2- 1 022 456
- US-A- 6 164 060
- US-A1- 2009 133 405

## Description

La présente invention concerne le domaine des chambres de combustion comportant un divergent.

Dans la description qui suit les termes "amont" et "aval" sont définis par rapport au sens de circulation normal des fluides dans la chambre de combustion le long des parois de cette chambre. Les termes "interne" et "externe" indiquent la région située à (ou dirigée vers) l'intérieur et l'extérieur de la chambre de combustion, respectivement.

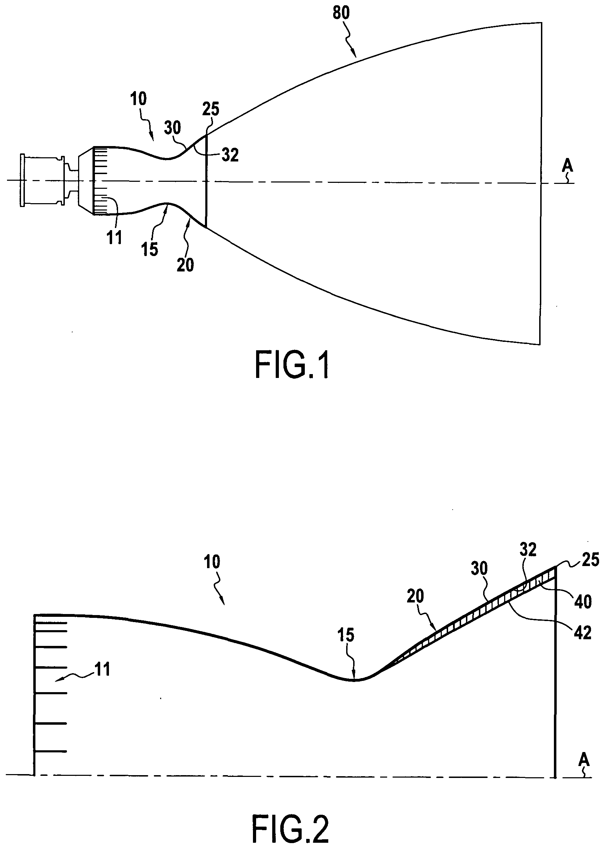

L'invention concerne plus particulièrement une chambre de combustion comportant, en aval de l'injection des gaz, un col, et en aval de ce col, un divergent dont la face externe de la paroi est, en fonctionnement, refroidie par un système de refroidissement entourant ladite face externe. Une chambre de combustion selon l'art antérieur est connue du document EP 0943795 A1. On considère en particulier une chambre de combustion de moteur fusée s'étendant dans une direction longitudinale définie par son axe de symétrie, la chambre de combustion possédant donc sensiblement une symétrie de révolution. L'axe de symétrie est donc contenu dans la chambre de combustion, par opposition au cas des chambres de combustions annulaires. Dans de telles chambres de combustion, les ergols (combustible et fluide oxydant, par exemple de l'hydrogène liquide et de l'oxygène liquide) sont injectés à une extrémité 11 de la chambre 10 par des injecteurs. La figure 1 montre une telle chambre de combustion 10. La réaction de combustion des ergols produit des gaz de combustion (par exemple de la vapeur d'eau) qui sont expulsés par un col 15 situé à l'opposé des injecteurs. En aval du col 15 (lieu de la chambre de combustion de section la plus faible), la chambre s'évase par un divergent 20, ce qui permet d'augmenter la vitesse des gaz de combustion expulsés au travers du col 15, et donc la poussée délivrée par le moteur. Ce divergent 20 de la chambre 10 se prolonge en aval par un divergent 80 du moteur fusée. Ce divergent 80 est fixé à l'extrémité aval 25 du divergent 20 de la chambre 10, et est une partie du moteur fusée qui est distincte de la chambre de combustion 10.

Les parois de la chambre de combustion 10 sont typiquement réalisées en cuivre ou en un alliage de cuivre, qui offre le meilleur compromis entre tenue thermomécanique et conductivité thermique. Durant le fonctionnement du moteur fusée, ces parois, y compris la paroi 30 du divergent 20, sont portées à des températures très élevées (les gaz de combustion peuvent être à une température de l'ordre de 3500 K en amont du col dans le cas d'une combustion d'oxygène et d'hydrogène) et doivent être refroidies (leur température au niveau du col ne doit pas dépasser 1000 K) afin de conserver leurs propriétés mécaniques. La méthode la plus courante pour effectuer ce refroidissement consiste à faire circuler un des ergols dans ou au contact de la paroi 30 du divergent 20 de la chambre 10 car ces ergols sont à une température très basse.

En effet, les ergols actuellement utilisés sont des gaz liquéfiés (pour minimiser leur volume), et sont donc à une température très basse au moment où ils sont injectés dans la chambre de combustion 10. Par conséquent ces ergols circulant (avant leur injection) autour de la paroi 30 du divergent 20 sont à une température (20 K à 100 K) qui est très inférieure à la température ambiante. On entend par température ambiante une température d'environ 300 K.

Cette circulation d'ergols permet de refroidir la paroi 30 de telle sorte que, lors du fonctionnement du moteur, la température de la face interne 32 de la paroi 30 est inférieure à la température de condensation des gaz de combustion s'échappant par le divergent 20. Par exemple, la température de la face interne 32 est inférieure à 400 K, par exemple inférieure à 300 K. Par conséquent les gaz de combustion (vapeur d'eau dans le cas d'une combustion oxygène-hydrogène) circulants dans le divergent 20 le long de la paroi 30 se condensent sur la face interne 32 de cette paroi 30, ce qui est indésirable.

En effet, cette condensation entraine un ruissellement le long de cette face interne 32, ce qui perturbe l'écoulement des gaz de combustion. De plus, cette condensation entraine localement des variations de la température de la face interne 32, ce qui génère localement des contraintes importantes qui peuvent conduire à une diminution de la durée de vie de la chambre. Il est donc nécessaire d'augmenter la température de la face interne 32 de cette paroi 30 afin de supprimer cette condensation.

Une solution envisagée pour augmenter la température de cette face interne 32 consiste à augmenter sa rugosité de façon à augmenter la surface d'échange de cette face interne 32 avec les gaz de combustion (vapeur d'eau dans le cas d'une combustion oxygène-hydrogène) de l'intérieur de la chambre. Cependant cette solution est difficile à réaliser car cette rugosité devrait être très fine pour que la surface d'échange soit suffisamment augmentée. De plus la modélisation des échanges thermiques dans le cas d'une telle surface rugueuse s'avère très complexe.

L'invention vise à proposer une chambre de combustion dont le divergent a une face interne sur laquelle il ne se forme sensiblement pas de condensation lors du fonctionnement du moteur, et qui soit aisée à fabriquer.

Ce but est atteint grâce au fait que ce divergent comporte, sur la face interne de sa paroi, un revêtement jouant le rôle de compensateur thermique afin que la température de la face interne de ce revêtement soit supérieure à la température de condensation des gaz de combustion sur cette face interne dans les conditions de fonctionnement, de telle sorte qu'il ne se forme pas de condensation sur cette face interne.

Grâce à ces dispositions, il se forme peu ou pas de condensation sur la face interne du divergent de la chambre de combustion lors du fonctionnement du moteur. La solution selon l'invention est plus facile à réaliser que les solutions existantes ou envisagées, car il n'est pas nécessaire d'augmenter la rugosité de la face interne du revêtement. De plus, l'épaisseur et la nature du revêtement peuvent être choisies en fonction des conditions de fonctionnement du divergent. La solution selon l'invention est donc polyvalente.

Avantageusement l'épaisseur du revêtement augmente graduellement vers l'aval depuis une valeur nulle en aval du col.

Ainsi, par exemple, l'épaisseur du revêtement augmente graduellement depuis une valeur nulle immédiatement en aval du col à une valeur maximale vers l'extrémité aval du divergent de la chambre. L'inventeur a montré par des essais qu'une telle répartition de l'épaisseur du revêtement permettait d'atteindre sur la face interne du revêtement une température le long de cette face dans le sens longitudinal sensiblement constante. En effet, l'augmentation graduelle de l'épaisseur de revêtement (c'est-à-dire sans augmentation brusque de cette épaisseur formant une marche) évite que la circulation des gaz de combustion (vapeur d'eau dans le cas d'une combustion oxygène-hydrogène) dans la chambre soit perturbée, et évite la création d'un gradient thermique local. Une telle configuration pour le revêtement est donc optimale et est la plus proche de l'objectif recherché.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1, déjà décrite, est une vue d'ensemble en coupe longitudinale d'un moteur fusée,
- la figure 2 est une vue en coupe longitudinale d'une chambre de combustion selon l'invention.

La figure 2 montre une coupe longitudinale de la chambre de combustion 10 selon l'invention du moteur fusée de la figure 1. Compte tenu de la symétrie de révolution de la chambre de combustion 10 autour de l'axe longitudinal A, seule la moitié de la chambre de combustion 10 est représentée. La vapeur d'eau, produit de la combustion des ergols injectés par les injecteurs 11, est éjectée par le col 15 puis le divergent 20, et circule donc de la gauche (amont) vers la droite (aval) sur la figure 2, sensiblement dans la direction de l'axe A.

La face externe de la paroi 30 du divergent 20 est refroidie par un système de refroidissement. Par exemple, ce système de refroidissement est un circuit régénératif (non représenté) dans lequel circule un liquide cryogénique.

Sur la face interne 32 de la paroi 30 du divergent 20, on dépose un revêtement 40. La face interne 42 du revêtement 40 est donc en contact avec la vapeur d'eau circulant dans la chambre de combustion 10.

Par exemple, le revêtement 40 recouvre toute la face interne 32 de la paroi 30 du divergent 20, c'est-à-dire jusqu'à l'extrémité aval 25 du divergent 20.

Sur le divergent 20 de la chambre de combustion, la géométrie sensiblement conique de ce divergent 20 fait que, de l'amont vers l'aval, une surface balayée par les gaz de combustion est plus importante, et cette géométrie conique entraîne en outre une détente des gaz de combustion. Le flux thermique le long de la paroi 30 diminue donc de l'amont vers l'aval, ce qui conduit en général à déposer une épaisseur de revêtement 40 qui va en augmentant depuis le col 15 vers l'extrémité aval 25 du divergent 20 afin de compenser la diminution du flux thermique.

Comme représenté sur la figure 2, l'épaisseur du revêtement 40 augmente graduellement de l'amont vers l'aval, jusqu'à l'extrémité aval 25 du divergent 20.

Alternativement l'épaisseur du revêtement 40 augmente graduellement depuis l'amont sur une partie amont du revêtement 40, puis est sensiblement constante jusqu'à l'extrémité aval 25 du divergent 20.

Alternativement, l'épaisseur du revêtement 40 peut augmenter graduellement depuis l'amont sur une partie amont du revêtement 40, puis diminuer, ou varier autrement jusqu'à l'extrémité aval 25 du divergent 20 en fonction de la géométrie du divergent 20.

Le revêtement peut être réalisé en divers matériaux.

Par exemple, le revêtement comprend une céramique.

Ainsi, dans la gamme de température de son utilisation selon l'invention et dans la gamme d'amplitude du gradient de température selon son épaisseur, le revêtement a une meilleure durée de vie, durant laquelle il conserve ses propriétés thermiques et sa résistance à l'usure. Notamment, la propension du revêtement à l'écaillage est très faible.

Par exemple, la céramique est une zircone yttriée.

De plus, le revêtement peut comprendre une sous-couche déposée directement sur la face interne de la paroi du divergent, la céramique étant ensuite déposée sur cette sous-couche.

Une telle sous-couche permet, de façon connue, d'améliorer l'accroche de la céramique sur le substrat, ce substrat étant ici la paroi 30.

Par exemple, la sous-couche est du type MCrAlY, où M est un métal.

Par exemple, ce métal est du nickel, du fer, du cobalt ou un alliage ou mélange de ces métaux.

L'inventeur a effectué des essais avec un revêtement 40 constitué d'une sous-couche en MCrAlY recouverte de zircone, ce revêtement étant déposé sur la paroi interne 32 d'une chambre de combustion de type cryogénique. Ces essais ont révélé qu'une couche de zircone d'une épaisseur comprise entre 50 microns et 100 microns (épaisseur correspondant à une conductivité thermique de la couche de zircone égale respectivement à 1 W/m·K et 2 W/m·K, selon le taux de porosités de cette couche) suffit à élever la température de la face interne 42 du revêtement 40 d'environ 100 K lorsque ce revêtement est soumis à un flux thermique de l'ordre de 10 MW/m² (MW = 10⁶ W).

Les épaisseurs de zircone requises sont sensiblement indépendantes de la conductivité thermique de la sous-couche sur une plage variant entre 5 W/m·K (sous-couche très poreuse) et 15 W/m·K (sous-couche très dense).

D'une manière générale, un revêtement 40 dont l'épaisseur est de l'ordre de 150 microns ou supérieure à 150 microns permet d'atteindre sur sa face interne 42 une température suffisamment haute pour éviter la formation de condensation sur cette face interne 42 lors du fonctionnement du moteur fusée.

Pour que cette condensation ne se forme pas, la température de la face interne 42 dudit revêtement 40 doit être supérieure à la température de condensation des gaz de combustion sur cette face interne 42 dans les conditions de fonctionnement du moteur fusée.

Par exemple, la température de la face interne 42 dudit revêtement 40 est supérieure de 50 K à cette température de condensation.

Cette température de condensation varie avec la nature des gaz de combustion, et avec la pression dans la chambre de combustion.

L'invention a été décrite ci-dessus dans le cas de chambre de combustion de moteurs fusée. Cependant l'invention peut s'appliquer à tout type de chambre de combustion comportant, en aval de l'injection des gaz, un col, et en aval de ce col, un divergent dont la face externe de la paroi est, en fonctionnement, refroidie par un système de refroidissement entourant la face externe.

## Revendications

1. Chambre de combustion (10) comportant, en aval de l'injection (11) des gaz, un col (15), et en aval de ce col, un divergent (20) dont la face externe de la paroi (30) est, en fonctionnement, refroidie par un système de refroidissement utilisant un produit cryogénique et entourant ladite face externe, ce divergent (20) étant **caractérisé en ce qu'**il comporte, sur la face interne (32) de sa paroi (30), un revêtement (40) jouant le rôle de compensateur thermique afin que la température de la face interne (42) dudit revêtement (40) soit supérieure à la température de condensation des gaz de combustion sur cette face interne (42) dans les conditions de fonctionnement, de telle sorte qu'il ne se forme pas de condensation sur cette face interne (42).

2. Chambre de combustion (10) selon la revendication 1, **caractérisée en ce que** l'épaisseur du revêtement (40) augmente graduellement vers l'aval depuis une valeur nulle en aval du col (15).

3. Chambre de combustion (10) selon la revendication 2, **caractérisée en ce que** l'épaisseur dudit revêtement (40) augmente graduellement, puis est sensiblement constante jusqu'à l'extrémité aval 25 du divergent 20.

4. Chambre de combustion (10) selon l'une quelconque des revendications 1 à 3, **caractérisée en ce que** ledit revêtement (40) comprend une céramique.

5. Chambre de combustion (10) selon la revendication 4, **caractérisée en ce que** ladite céramique est une zircone yttriée.

6. Chambre de combustion (10) selon la revendication 4 ou 5, **caractérisée en ce que** le dit revêtement (40) comprend en outre une sous-couche déposée directement sur ladite face interne (32) de la paroi (30) du divergent (20), et ladite céramique étant déposée sur cette sous-couche.

7. Chambre de combustion (10) selon la revendication 6, **caractérisée en ce que** ladite sous-couche est du type MCrAlY, où M est un métal.

8. Chambre de combustion (10) selon l'une quelconque des revendications 1 à 7, **caractérisée en ce que** l'épaisseur dudit revêtement (40) est de l'ordre de 150 microns.

9. Chambre de combustion (10) selon l'une quelconque des revendications 1 à 8, **caractérisée en ce que** ledit revêtement (40) recouvre toute ladite face interne (32) de la paroi (30) du divergent (20).

10. Chambre de combustion (10) selon l'une quelconque des revendications 1 à 9, **caractérisée en ce que** ledit système de refroidissement est un circuit régénératif dans lequel circule un liquide cryogénique.

## Patentansprüche

1. Brennkammer (10), umfassend stromabwärts zur Einspritzung (11) der Gase einen Hals (15) und stromabwärts zu diesem Hals eine Expansionsdüse (20), deren Außenseite der Wand (30) während des Betriebs durch ein Kühlsystem gekühlt wird, das ein kryogenes Produkt verwendet und die Außenseite bedeckt, wobei diese Expansionsdüse (20) durch gekennzeichnet ist, dass sie auf der Innenseite (32) ihrer Wand (30) eine Verkleidung (40) umfasst, die die Rolle eines Wärmekompensators spielt, so dass die Temperatur der Innenseite (42) der Verkleidung (40) höher als die Kondensationstemperatur der Verbrennungsgase auf dieser Innenseite (42) unter den Betriebsbedingungen ist, so dass sich keine Kondensation an dieser Innenseite (42) bildet.

2. Brennkammer (10) gemäß Anspruch 1, **dadurch gekennzeichnet, dass** die Dicke der Verkleidung (40) stufenweise stromabwärts von einem Nullwert stromabwärts zum Hals (15) zunimmt.

3. Brennkammer (10) gemäß Anspruch 2, **dadurch gekennzeichnet, dass** die Dicke der Verkleidung (40) stufenweise zunimmt, dann bis zum stromabwärtigen Ende 25 der Expansionsdüse im Wesentlichen konstant ist.

4. Brennkammer (10) gemäß einem der Ansprüche 1 bis 3, **dadurch gekennzeichnet, dass** die Verkleidung (40) eine Keramik umfasst.

5. Brennkammer (10) gemäß Anspruch 4, **dadurch gekennzeichnet, dass** die Keramik ein mit Yttriumoxid stabilisiertes Zirkonoxid ist.

6. Brennkammer (10) gemäß Anspruch 4 oder 5, **dadurch gekennzeichnet, dass** die Verkleidung (40) ferner eine Unterschicht umfasst, die direkt auf die Innenseite (32) der Wand (30) der Expansionsdüse (20) aufgebracht ist, wobei die Keramik auf diese Unterschicht aufgebracht ist.

7. Brennkammer (10) gemäß Anspruch 6, **dadurch gekennzeichnet, dass** die Unterschicht vom Typ MCrAlY ist, wobei M ein Metall ist.

8. Brennkammer (10) gemäß einem der Ansprüche 1 bis 7, **dadurch gekennzeichnet, dass** die Dicke der Verkleidung (40) ungefähr 150 Mikrometer beträgt.

9. Brennkammer (10) gemäß einem der Ansprüche 1 bis 8, **dadurch gekennzeichnet, dass** die Verkleidung (40) die gesamte Innenseite (32) der Wand (30) der Expansionsdüse (20) bedeckt.

10. Brennkammer (10) gemäß einem der Ansprüche 1 bis 9, **dadurch gekennzeichnet, dass** das Kühlsystem ein regenerativer Schaltkreis ist, in dem eine kryogene Flüssigkeit zirkuliert.

## Claims

1. Combustion chamber (10) comprising a neck (15) downstream of the injection (11) of gases, and downstream of this neck a divergent section (20) whereof the outer face of the wall (30), when in operation, is cooled by a cooling system using a cryogenic product and surrounding the said outer face, this divergent section (20) being **characterized in that** on the inner face (32) of its wall (30) it comprises a coating (40) acting as temperature compensator so that the temperature of the inner face (42) of said coating (40) is higher than the condensation temperature of the combustion gases on this inner face (42) under operating conditions, such that no condensation is formed on this inner face (42).

2. The combustion chamber (10) according to claim 1, **characterized in that** the thickness of said coating (40) increases gradually towards downstream from a zero value downstream of said neck (15).

3. The combustion chamber (10) according to claim 2, **characterized in that** the thickness of said coating (40) increases gradually and then becomes substantially constant as far as the downstream end (25) of said divergent section (20).

4. The combustion chamber (10) according to any of claims 1 to 3, **characterized in that** said coating (40) comprises a ceramic.

5. The combustion chamber (10) according to claim 4, **characterized in that** said ceramic is yttria-stabilized zirconia.

6. The combustion chamber (10) according to claim 4 or 5 **characterized in that** said coating (40) further comprises a sub-layer deposited directly on the said inner face (32) of said wall (30) of the divergent section (20), and said ceramic being deposited on this sub-layer.

7. The combustion chamber (10) according to claim 6, **characterized in that** the said sub-layer is of MCrAlY type, where M is a metal.

8. The combustion chamber (10) according to any of claims 1 to 7, **characterized in that** the thickness of said coating (40) is of the order of 150 microns.

9. The combustion chamber (10) according to any of claims 1 to 8, **characterized in that** said coating (40) covers the entire said inner face (32) of said wall (30) of the divergent section (20).

10. The combustion chamber (10) according to any of claims 1 to 9, **characterized in that** said cooling system is a regenerative circuit in which a cryogenic liquid circulates.
